# EUROPEAN PATENT SPECIFICATION

(11) **EP 1 841 254 B1**
(45) Date of publication and mention of the grant of the patent: **26.12.2007**
(21) Application number: 06006566.1
(22) Date of filing: 29.03.2006
(51) Int. Cl.: H04Q 7/38

(54) **Method for defining a zone for location based billing and/or location based services**
Verfahren zur Bestimmung einer Zone für ortsabhängige Vergebührung und/oder Dienste
Procédé pour definir une zone de facturation et/ou de services en fonction du lieu

(43) Date of publication of application: 03.10.2007
(73) Proprietor: O2 (Germany) GmbH & Co. OHG, 80992 München (DE)
(72) Inventor: Marsden, Roger, 81737 München (DE); Franke, Wolfgang, 45525 Hattingen (DE); Perchthaler, Dirk, 85256 Vierkirchen (DE)
(74) Representative: Herrmann, Uwe

(56) References cited:
- WO-A-20/05041604
- US-B1- 6 424 840
- US-B1- 6 618 594
- US-B1- 6 721 755

## Description

The present invention is directed to a method for defining a zone for location based billing and/or location based services, wherein the zone is a part of a geographical area which is served by nodes of a telecommunications network such as a telecommunications network according to the GSM or UMTS standard.

Operators providing service over an air interface medium may provide service differentiation to their end users based upon location. The location is physically defined by a communicated geographical area which is assimilated by the operator into a radiation footprint propagated by nodes which provide communication to and from the terminal devices such as cell phones of the end users.

The end user is aware of being located in such location or zone through a distinct indication, for example visually or audibly and/or through differentiation in the billing and/or through use differentiation in service experience, e.g. higher output, privileged service capabilities regarding the use of the terminal device.

For any given location the effective boundaries change over time due to subsequent topological change to the network node infrastructure, i.e. new rollout, redeployment or physical removal. Over time the network-operator must continually reassess and re-communicate the location to the affected end user over time.

Prior art document US 6,424,840 B1 discloses a method for the dynamic assignment of a location based zone in accordance with the preamble portion of claim 1. In order to avoid substantial revision of the stored zone definition in connection with changes in the network topology the disclosed method is based on the idea to store the zone definitions independent of the network topology, for example based on coordinates. At or near the time of location determination the zone definition is correlated to the current network topology in order to assess whether or not a location based billing or service is to be offered to the customer.

Prior art document US 6,721,755 B1 discloses a device for creating a home zone database for a home zone service which comprises a memory in which the address of a client is assigned a latitude and longitude information and in which a zone database is provided for storing a predetermined home zone information corresponding to said latitude and longitude information. Based on the information in said memory a home zone information is created which includes an identifier and a sector information of a base station as well as values for a minimum and a maximum round trip delay for defining the boundary of the home zone.

It is the object of the present invention to define a zone for location based billing and/or services that optimally anticipates future undisclosed topology evolutions and hence minimises the occurrence of updating existing end user location definitions.

This object is solved by a method defined in claim 1 and by a system defined in claim 12.

According with the invention the method comprises the steps of:
a) defining a zone within the geographical area,
b) determining all serving nodes of the telecommunications network which serve said zone defined in step a),
c) determining an initial area whose geographical perimeter envelopes the physical location of said serving nodes,
d) determining a density vector which has its basis in the centroid of said initial area defined in step c) and which points into the direction of the smallest density of said serving nodes being located in said initial area and
e) determining the maximum size of a final area which has its centroid on said density vector and which is enlarged compared to the initial area so that no nodes are located in said final area which are not located in said initial area, wherein the final area is said zone for location based billing.

For example a database maintains a physical location attribute of all nodes resident in the network offered by the network provider to the end user.

According to step b) all node members who are considered as delivering the location are defined, i.e. all serving nodes are identified.

In step c) a so called initial area is defined whose geographical perimeter envelopes the physical location of said serving nodes. This initial area may have any shape such as a polygon or a circle.

According to step d) a density vector is determined which has its origin at the centroid of the initial area. The direction of this vector points towards the area of lowest density of serving nodes, i.e. to the least densely serving node-populated area of the initial area.

In step e) the maximum size of a final area is determined that can be achieved so that there is preferably no modification to the relative shape of the initial area to the final area, wherein the centroid of the final area is located on said vector and wherein the final area shall not envelope any non-serving node.

The final area thus exhibits the following characteristics:
- it envelopes the same nodes as the initial area, these being the nodes required that point of the network node topology to describe the location
- enveloped nodes may lie at a non-zero distance from its perimeter, which gives some tolerance of movement to these nodes without requiring a redefinition of the location
- non-enveloped nodes which through re-positioning are most likely to become serving nodes are given maximum freedom of movement to be enveloped, since the perimeter of the final area may lie close to their present position. Non-enveloped nodes which through re-positioning are less likely to become serving nodes are given less freedom of movement to be enveloped because the perimeter of the final area generally lies further from their present position.
- the final area envelopes an area which considering the positions of existing nodes represents the most likely area in which new cells also serving the location will be incorporated without requiring a redefinition of the location.

The above mentioned initial area and the final area may have the shape of a circle. However, any other shape is also conceivable.

The zone defined in step a) may be a circle centered on a defined location, in particular on an address of the user of the telecommunications network. The circle my have a predefined radius. For example the zone is a circle having a radius of 500 m and being centered at the home or office address of the user. All nodes which provide radio coverage in part of this area are considered as serving nodes. The circle is extended, but centroid is not moved, such that the radius touches the furthest away serving node. This larger circle is considered as the initial area.

In accordance with a further embodiment of the invention the density of said serving nodes is defined by the proximity of these nodes inside the initial area to one another and to the centroid of the initial area. Thus the density vector points towards the area which is least densely populated by the service nodes of the initial area.

In accordance with a preferred embodiment of the invention the density vector points into a direction which may be determined as follows:
- defining a reference line passing through the centroid of the initial area,
- determining the angle Φᵢ between a line connecting the centroid of the initial area with a serving node i and the reference line for each of said serving nodes being physically located within the initial area
- determining the distance rᵢ between the physical location of each of the nodes i being physically located within the initial area and the centroid of the initial area and
- determining the angle Φ_{vector} between said reference line and the density vector by the following formula: Φ_{vector} = Σ (Φᵢ rᵢ) / Σ rᵢ + *π*, wherein the summations are performed for all serving nodes i which are located within the initial area.

The initial area may be determined such that it is the smallest area which just covers the serving nodes determined in step b). The initial area may have the shape of a circle which has a radius such that the serving node having the greatest distance to the centroid is just enveloped or lies on the perimeter.

The final area may be determined such that it is the largest possible area which does not include any non serving node determined in step b). It is also conceivable that the final area is enlarged such that a non serving node lies on the perimeter thereof.

In case that two network mediums are offered by a network provider such as GSM and UMTS the method for defining a zone for location based billing is performed for each of said mediums independently. In other words the method according to the invention is performed for the GSM network as well as for the UMTS network, the result of which are two final areas, one for each of the networks.

In order to obtain an "overall" consolidated area it is possible to define such area having its centroid at the median point one the line connecting the centroids of the final areas determined for each of the network mediums and have a shape expanded such that it envelopes the final areas determined for each of the network mediums. In this case additional non-serving nodes may by subsumed into the consolidated area and these nodes shall be considered also as serving the location.

The invention is further directed to a system or apparatus comprising means for performing the method according to any one of claims 1 to 12. These means for example may comprise databases for storing physical location attributes of all nodes resident in the network and means for performing each of the steps by which the method claims are defined such as computing means for performing steps b) - e) of claim 1.

Further advantages of the invention are explained on the basis of the exemplary embodiment shown in the drawings. The figures show:
- Fig. 1:: The initial area determined in step c)
- Fig. 2:: the way to determine the direction of the vector (left hand picture) and the initial area together with said vector (right hand picture)
- Fig. 3:: the final area determined in step e) and
- Fig. 4:: a consolidated area in case of two network standards being available.

An operator defines a location to a subscriber in GSM and UMTS access networks such that serving nodes are identified as being those which provide radio coverage within a predefined distance to a given address (geographical latitude and longitude).

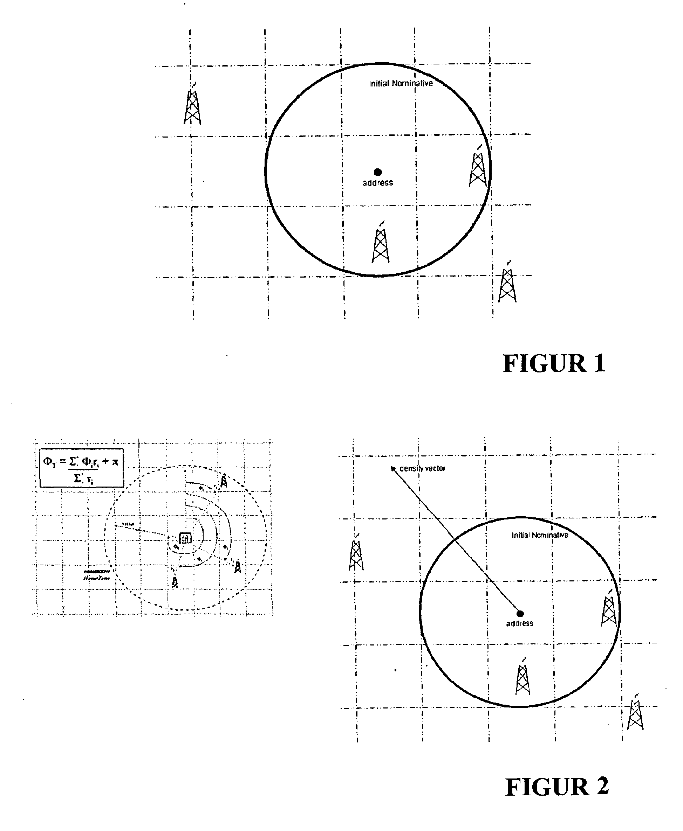

An initial area which is shown in Fig. 1 as circle is subscribed which just envelopes the serving nodes in GSM, i.e. one or more nodes lie on the circle.

As shown in Fig. 1 two nodes lie within the initial area which is the smallest circle which envelopes the physical locations of the serving nodes of a predefined location.

Two further nodes are determined as not being serving nodes.

In the next step a density vector is calculated by a distance-weighted / angular formula Φ_{vector} = Σ (Φᵢ rᵢ) / Σ rᵢ + *π*, wherein the angle Φᵢ is the angle between a line connecting the centroid of the initial area with a serving node i and a reference line for each of said serving nodes being physically located within the initial area and wherein rᵢ is the distance between the physical location of each of these nodes i and the centroid. The reference line is shown in Fig. 2 (left hand part) as vertical line which runs through the center of the initial area.

Referring to the example shown in Fig. 1 and Fig. 2 (right hand part) there are just two nodes which both lie a similar distance from the centre. Hence the density vector points towards a direction which is opposite the average polar angle of the two.

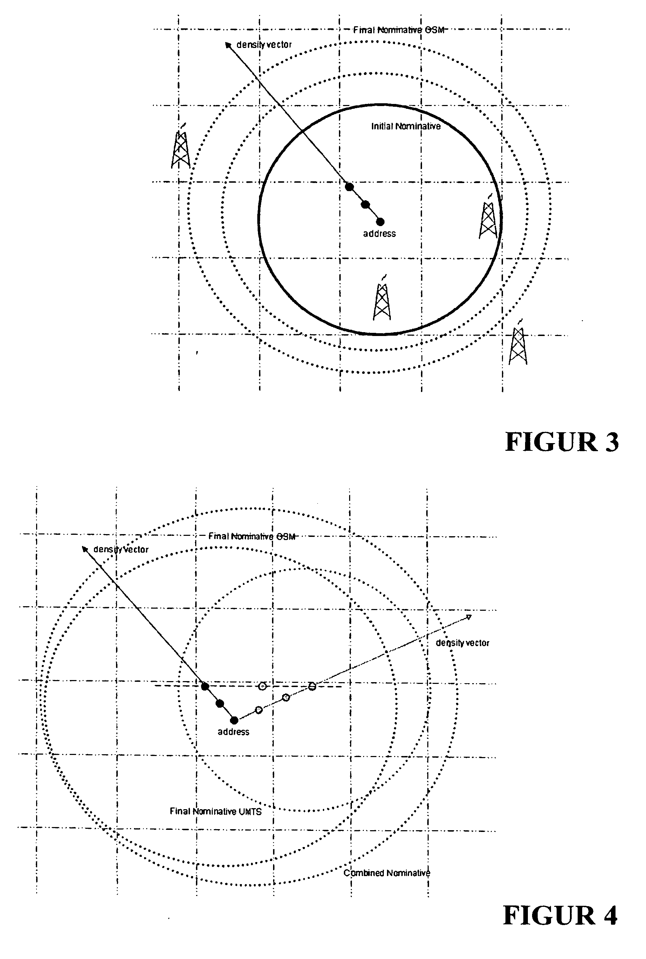

In a next step the centroid of the polygon, in the present example the centre of the circle is moved on the above determined vector whereby the size of the polygon is increased which is shown in Fig. 4 by a series of increasingly larger broken circles.

The largest possible circle which does not envelope additional, i.e. non-serving nodes is set as the final area which is defined as the zone for location based billing and/or services.

Fig. 5 refers to an example in accordance to which two network standards are available. In this case the method described above is performed for each of these standards, i.e. in the present example for GSM and UMTS. The result are two circles having differing centres and differing sizes. The consolidated area is depicted in the figure as the largest broken circle whereas the inner, smaller broken circles are the final areas of the respective network standards.

The consolidated area is defined by having its centroid as a median of the centroids of the final areas of the respective networks and by having a dimension so that both initial areas of the respective networks are enveloped as shown in Fig. 5.

In this case all nodes, in the present example GSM or UMTS which are physically inside the consolidated area are considered as serving the location.

## Claims

1. Method for defining a zone for location based billing and/or services, wherein the zone is a part of a geographical area which is served by nodes of a telecommunications network, the method comprising the steps of:
a) defining a zone within the geographical area,
b) determining all serving nodes of the telecommunications network which serve said zone defined in step a),
**characterized in that**
the method further comprises the steps of
c) determining an initial area whose geographical perimeter envelopes the physical location of all of said serving nodes,
d) determining a density vector which has its basis in the centroid of said initial area defined in step c) and which points into the direction of the smallest density of said serving nodes being located in said initial area
and
e) determining the maximum size of a final area which has its centroid on said density vector and which is enlarged compared to the initial area so that no nodes are located in said final area which are not located in said initial area, wherein the final area is said zone for location based billing.

2. Method according to claim 1, wherein the initial area and the final area are circles.

3. Method according to claim 1 or 2, wherein the zone defined in step a) is a circle centered on a defined location, in particular on an address of the user of the telecommunications network.

4. Method according to claim 3, wherein the circle has a predefined radius.

5. Method according to any one of the preceding claims, wherein the density of said serving nodes is defined by the proximity of these nodes inside the initial area to one another and to the centroid of the initial area.

6. Method according to any one of the preceding claims, wherein the density vector points into a direction which determined as follows:
• defining a reference line passing through the centroid of the initial area,
• determining the angle Φᵢ between a line connecting the centroid of the initial area with a serving node i and the reference line for each of said serving nodes being physically located within the initial area
• determining the distance rᵢ between the physical location of each of the nodes i being physically located within the initial area and the centroid of the initial area and
• determining the angle Φ_{vector} between said reference line and the density vector by the following formula: Φ_{vector} = Σ (Φᵢ rᵢ) / Σ rᵢ + *π*, wherein the summations are performed for all serving nodes I which are located within the initial area.

7. Method according to any one of the preceding claims, wherein the initial area is determined such that it is the smallest area which just covers the serving nodes determined in step b).

8. Method according to any one of the preceding claims, wherein the final area is determined such that it is the largest possible area which does not include any non serving node determined in step b).

9. Method according to any one of the preceding claims, wherein when two network mediums are offered by a network provider the method for defining a zone for location based billing is performed for each of said mediums independently.

10. Method according to claim 9, wherein a consolidated area is defined having its centroid in the median point of the centroids of the final areas determined for each of the network mediums and have a shape expanded such that it envelopes the final areas determined for each of the network mediums.

11. Method according to claim 9 or 10, wherein said network media are GSM and UMTS.

12. Method according to any one of the preceding claims, wherein the final area determined in step e) has the same relative shape than the initial area determined in step c).

13. System comprising means for performing the method according to any one of claims 1 to 12.

## Patentansprüche

1. Verfahren zum Definieren einer Zone für ortsabhängige Vergebührung und/oder Dienste, wobei die Zone Teil eines geographischen Gebiets ist, das durch Knoten eines Telekommunikationsnetzes versorgt wird, wobei das Verfahren die folgenden Schritte umfasst:
a) Definieren einer Zone in dem geographischen Gebiet,
b) Ermitteln aller Versorgungsknoten des Telekommunikationsnetzes, die die in Schritt a) definierte Zone versorgen,
**dadurch gekennzeichnet, dass**
das Verfahren ferner die folgenden Schritte umfasst:
c) Ermitteln eines Anfangsgebiets, dessen geographischer Umfang die physische Lage aller dieser Versorgungsknoten umschließt,
d) Ermitteln eines Dichtevektors, dessen Basis im Flächenschwerpunkt des in Schritt c) definierten Anfangsgebiets liegt und der in die Richtung der kleinsten Dichte der in dem Anfangsgebiet liegenden Versorgungsknoten zeigt, und
e) Ermitteln der maximalen Größe eines Endgebiets, dessen Flächenschwerpunkt auf dem Dichtevektor liegt und das gegenüber dem Anfangsgebiet vergrößert ist, so dass in dem Endgebiet keine Knoten liegen, die nicht in dem Anfangsgebiet liegen, wobei das Endgebiet die Zone für ortsabhängige Vergebührung ist.

2. Verfahren nach Anspruch 1, wobei das Anfangsgebiet und das Endgebiet Kreise sind.

3. Verfahren nach Anspruch 1 oder 2, wobei die in Schritt a) definierte Zone ein auf einem definierten Ort, insbesondere auf einer Adresse des Nutzers des Telekommunikationsnetzes zentrierter Kreis ist.

4. Verfahren nach Anspruch 3, wobei der Kreis einen vordefinierten Radius hat.

5. Verfahren nach einem der vorhergehenden Ansprüche, wobei die Dichte der Versorgungsknoten definiert ist durch die Nähe dieser Knoten in dem Anfangsgebiet zueinander und zu dem Flächenschwerpunkt des Anfangsgebiets.

6. Verfahren nach einem der vorhergehenden Ansprüche, wobei der Dichtevektor in eine Richtung zeigt, die wie folgt ermittelt wird:
• Definieren einer durch den Flächenschwerpunkt des Anfangsgebiets verlaufenden Bezugslinie,
• Ermitteln des Winkels Φᵢ zwischen einer den Flächenschwerpunkt des Anfangsgebiets mit einem Versorgungsknoten i verbindenden Linie und der Bezugslinie für jeden der Versorgungsknoten, die physisch in dem Anfangsgebiet liegen,
• Ermitteln des Abstands rᵢ zwischen der physischen Lage jedes der Knoten i, die physisch in dem Anfangsgebiet liegen, und dem Flächenschwerpunkt des Anfangsgebiets, und
• Ermitteln des Winkels Φ_{Vektor} zwischen der Bezugslinie und dem Dichtevektor anhand der folgenden Formel: Φ*_{Vektor}* = Σ(Φ*ᵢrᵢ*)/Σ*rᵢ*+*π*, wobei die Summierungen für alle Versorgungsknoten i durchgeführt werden, die in dem Anfangsgebiet liegen.

7. Verfahren nach einem der vorhergehenden Ansprüche, wobei das Anfangsgebiet so ermittelt wird, dass es die kleinste Fläche ist, die die in Schritt b) ermittelten Versorgungsknoten gerade bedeckt.

8. Verfahren nach einem der vorhergehenden Ansprüche, wobei das Endgebiet so ermittelt wird, dass es die größte mögliche Fläche ist, die keinen in Schritt b) ermittelten Versorgungsknoten enthält.

9. Verfahren nach einem der vorhergehenden Ansprüche, wobei dann, wenn von einem Netzanbieter zwei Netzmedien angeboten werden, das Verfahren zum Definieren einer Zone für ortsabhängige Vergebührung für jedes der Medien unabhängig durchgeführt wird.

10. Verfahren nach Anspruch 9, wobei ein übergeordnetes Gebiet definiert wird, dessen Flächenschwerpunkt im Medianpunkt der Flächenschwerpunkte der für jedes der Netzmedien ermittelten Endgebiete liegt und das eine derart erweiterte Form hat, dass es die für jedes der Netzmedien ermittelten Endgebiete umschließt.

11. Verfahren nach Anspruch 9 oder 10, wobei die Netzmedien GSM und UMTS sind.

12. Verfahren nach einem der vorhergehenden Ansprüche, wobei das in Schritt e) ermittelte Endgebiet dieselbe relative Form hat wie das in Schritt c) ermittelte Anfangsgebiet.

13. System mit Mitteln zum Durchführen des Verfahrens nach einem der Ansprüche 1 bis 12.

## Revendications

1. Procédé en vue de définir une zone pour des services et/ou une facturation basée sur une localisation, dans lequel la zone est une partie d'une zone géographique qui est desservie par des noeuds d'un réseau de télécommunication, le procédé comportant les étapes consistant à:
a) définir une zone au sein de la zone géographique,
b) déterminer la totalité des noeuds de service du réseau de télécommunication desservant ladite zone définie à l'étape a),
**caractérisé en ce que**
le procédé comporte en outre les étapes consistant à
c) déterminer une zone initiale dont le périmètre géographique englobe la localisation physique de la totalité desdits noeuds de service,
d) déterminer un vecteur de densité qui a sa base dans le centre de gravité de ladite zone initiale définie à l'étape c), et qui pointe dans la direction de la plus petite densité desdits noeuds de service étant localisés dans ladite zone initiale
et
e) déterminer la taille maximale d'une zone finale qui a son centre de gravité sur ledit vecteur de densité et qui est étendue relativement à la zone initiale de sorte qu'aucun noeud ne soit localisé dans ladite zone finale, dès lors qu'il n'est pas localisé dans ladite zone initiale, dans laquelle la zone finale est ladite zone destinée à une facturation basée sur une localisation.

2. Procédé selon la revendication 1, dans lequel la zone initiale et la zone finale sont des cercles.

3. Procédé selon la revendication 1 ou 2, dans lequel la zone définie à l'étape a) est un cercle centré sur une localisation définie, en particulier sur une adresse de l'utilisateur du réseau de télécommunication.

4. Procédé selon la revendication 3, dans lequel le cercle a un rayon prédéfini.

5. Procédé selon l'une quelconque des revendications précédentes, dans lequel la densité desdits noeuds de service est définie par la proximité mutuelle de ces noeuds au sein de la zone initiale et au centre de gravité de la zone initiale.

6. Procédé selon l'une quelconque des revendications précédentes, dans lequel le vecteur de densité pointe dans une direction qui est déterminée par les,étapes consistant à:
• définir une ligne de référence passant par le centre de gravité de la zone initiale,
• déterminer l'angle ϕᵢ entre une ligne reliant le centre de gravité de la zone initiale avec un noeud de service i et la ligne de référence pour chacun desdits noeuds de service étant physiquement localisés au sein de la zone initiale,
• déterminer la distance rᵢ entre la localisation physique de chacun des noeuds i étant physiquement localisés au sein de la zone initiale et le centre de gravité de la zone initiale et,
• déterminer l'angle ϕ_{vector} entre ladite ligne de référence et le vecteur de densité par la formule suivante: **Φ_{vector} = Σ (Φᵢ rᵢ) / Σ rᵢ + *π***, dans laquelle les sommations sont exécutées pour tous les noeuds de service i qui sont localisés au sein de la zone initiale.

7. Procédé selon l'une quelconque des revendications précédentes, dans lequel la zone initiale est déterminée de sorte qu'elle soit la plus petite zone possible qui couvre uniquement les noeuds de service déterminés à l'étape b).

8. Procédé selon l'une quelconque des revendications précédentes, dans lequel la zone finale est déterminée de sorte qu'elle soit la plus grande zone possible qui n'inclut pas un quelconque noeud de non service déterminé à l'étape b).

9. Procédé selon l'une quelconque des revendications précédentes, dans lequel lorsque deux supports de réseau sont proposés par le fournisseur de réseau, le procédé destiné à définir une zone en vue d'une facturation basée sur une localisation est exécuté pour chacun desdits supports indépendamment.

10. Procédé selon la revendication 9, dans lequel une zone consolidée est définie ayant son centre de gravité dans le point médian des centres de gravité des zones finales déterminées pour chacun des supports de réseau et présente une forme étendue de sorte qu'elle englobe les zones finales déterminées pour chacun des supports de réseau.

11. Procédé selon la revendication 9 ou 10, dans lequel lesdits supports de réseau sont GSM et UMTS.

12. Procédé selon l'une quelconque des revendications précédentes, dans lequel la zone finale déterminée à l'étape e) a la même forme relative que la zone initiale déterminée à l'étape c).

13. Système comportant des moyens en vue d'exécuter le procédé selon l'une quelconque des revendications 1 à 12.
